# EUROPEAN PATENT APPLICATION

(11) **EP 1 873 092 A1**
(43) Date of publication of application: **02.01.2008**
(21) Application number: 07011605.8
(22) Date of filing: 13.06.2007
(51) Int. Cl.: B65G 49/06

(54) **Bilateral machine for processing glass panes shaped like a parallelogram with non-right angles**

(30) Priority: 27.06.2006 IT MI20061234
(71) Applicant: GLASTON ITALY SPA, 22070 Bregnano (CO) (IT)
(72) Inventor: Sandri, Paolo, 10100 Torino (IT)
(74) Representative: Alagem Modiano, Lara S.

(57) **Abstract**

A bilateral machine (1) for processing glass panes shaped like a parallelogram with non-right angles, comprising an input station (2) downstream of which there is a first bilateral unit (4) which leads to an angle transfer assembly (20) which is arranged upstream of a second bilateral unit (30), the angle transfer assembly (20) comprising means (21) for rotation on the plane of arrangement of the pane being processed and means (40) which can be activated selectively for the alignment of the unprocessed edge of the pane being processed.

## Description

The present invention relates to a bilateral machine for processing glass panes shaped like a parallelogram with non-right angles.

As is known, bilateral machines are already commercially available which automatically process the edges of rectangular or square glass panes, since the glass pane is first processed on two mutually opposite sides, by means of a first bilateral unit, and then the pane is introduced into a transfer assembly, which causes the advancement of the pane along a perpendicular direction, achieving the processing of the other two sides by means of a second bilateral unit.

Such types of machines allow to process automatically only panes which have a rectangular or square shape and consequently have four right angles; if it is necessary to process panes which are shaped like a parallelogram but have non-right angles, currently the pane is inserted into a machine with one side on the references of the bilateral machine, performing accordingly the processing on the first two parallel sides.

Thereafter, the pane has to be picked up manually and turned so as to insert it in order to process the remaining two sides.

The aim of the invention is to solve the problem described above by providing a bilateral machine for processing panes shaped like a parallelogram with non-right angles, which allows to perform processing on the mutually opposite sides in a completely automatic manner.

Within this aim, an object of the invention is to provide a bilateral machine which allows to perform processing in succession on all sides without requiring the manual intervention of the operator.

Another object of the present invention is to provide a bilateral machine for processing panes shaped like a parallelogram with non-right angles which, thanks to its particular constructive characteristics, is capable of giving the greatest assurances of reliability and safety in use.

Still another object of the present invention is to provide a bilateral machine which can be obtained easily starting from commonly commercially available elements and materials and is also competitive from a merely economical standpoint.

This aim and these and other objects, which will become better apparent hereinafter, are achieved by a bilateral machine for processing panes shaped like a parallelogram with non-right angles, according to the invention, comprising an input station downstream of which there is a first bilateral unit which leads to an angle transfer assembly which is arranged upstream of a second bilateral unit, characterized in that said angle transfer assembly comprises means for rotation on the plane of arrangement of the pane being processed and means which can be activated selectively for the alignment of the unprocessed edges of the pane being processed.

Further characteristics and advantages will become better apparent from the description of a preferred but not exclusive embodiment of a bilateral machine for processing panes shaped like a parallelogram with non-right angles, illustrated by way of non-limiting example in the accompanying drawings, wherein:

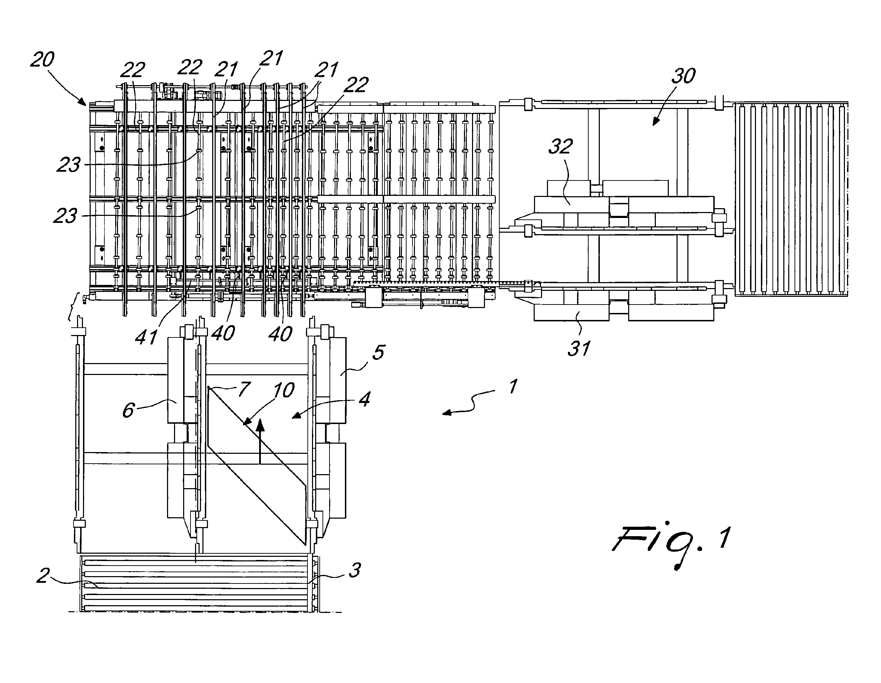

Figure 1 is a schematic plan view of the bilateral machine according to the invention during insertion of the pane being processed in the first bilateral unit;

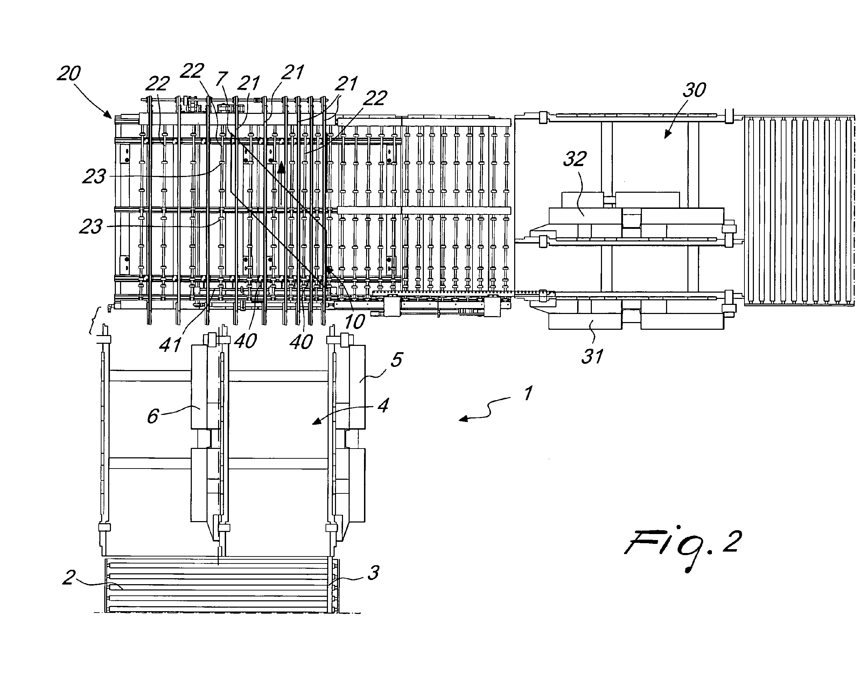

Figure 2 is a plan view of the bilateral machine with the pane on the angle transfer assembly;

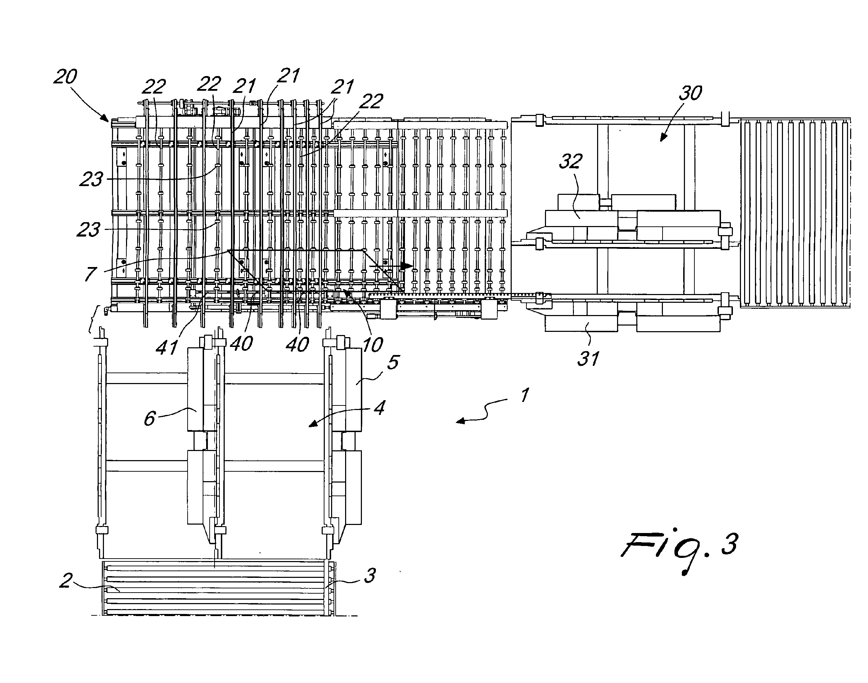

Figure 3 is a plan view of the bilateral machine after turning the pane on the angle transfer assembly;

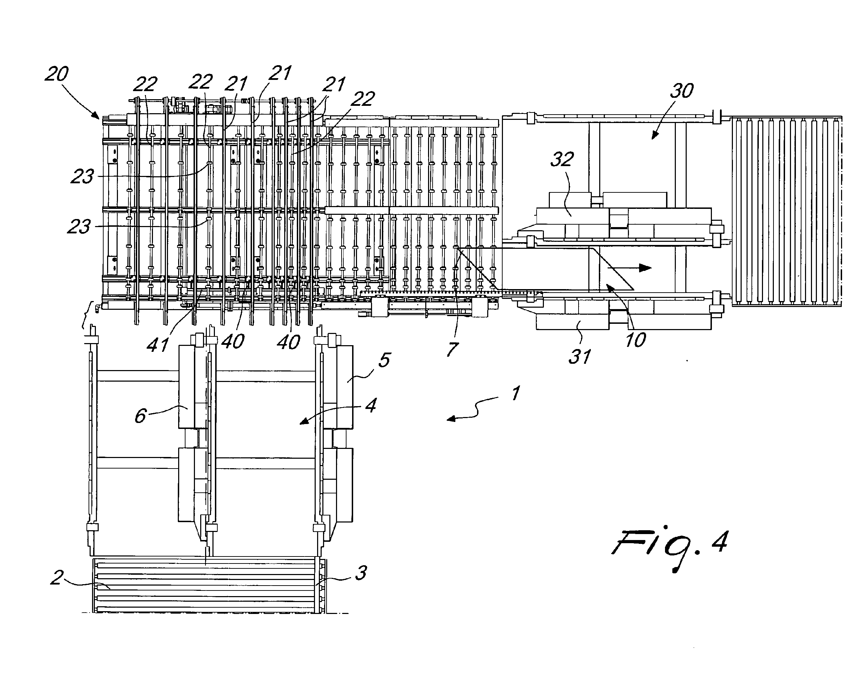

Figure 4 is a view of the final step of the processing of the glass pane;

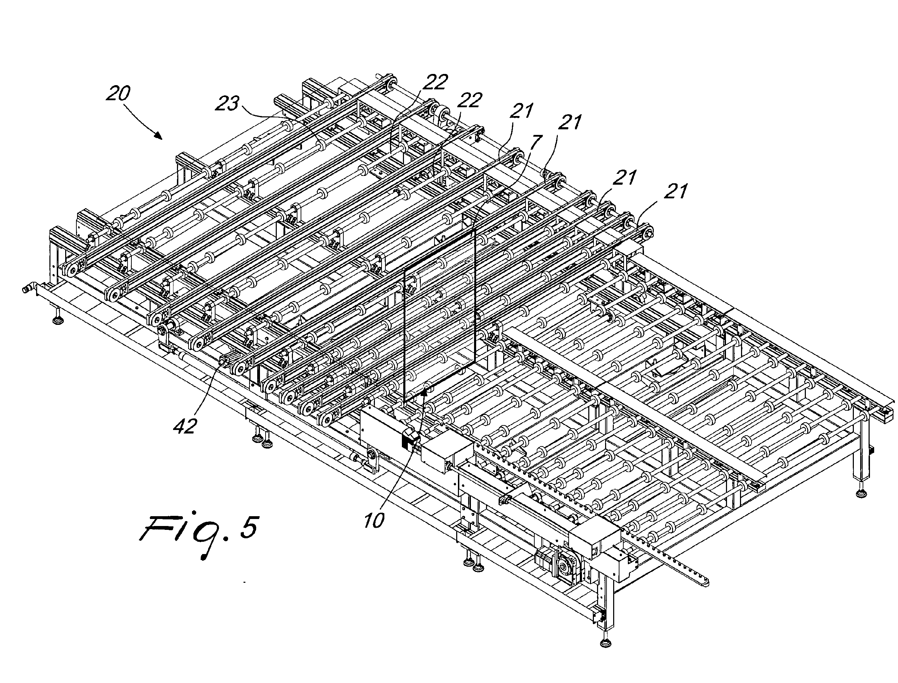

Figure 5 is a schematic perspective view of the angle transfer assembly with the pane that arrives from the first bilateral unit;

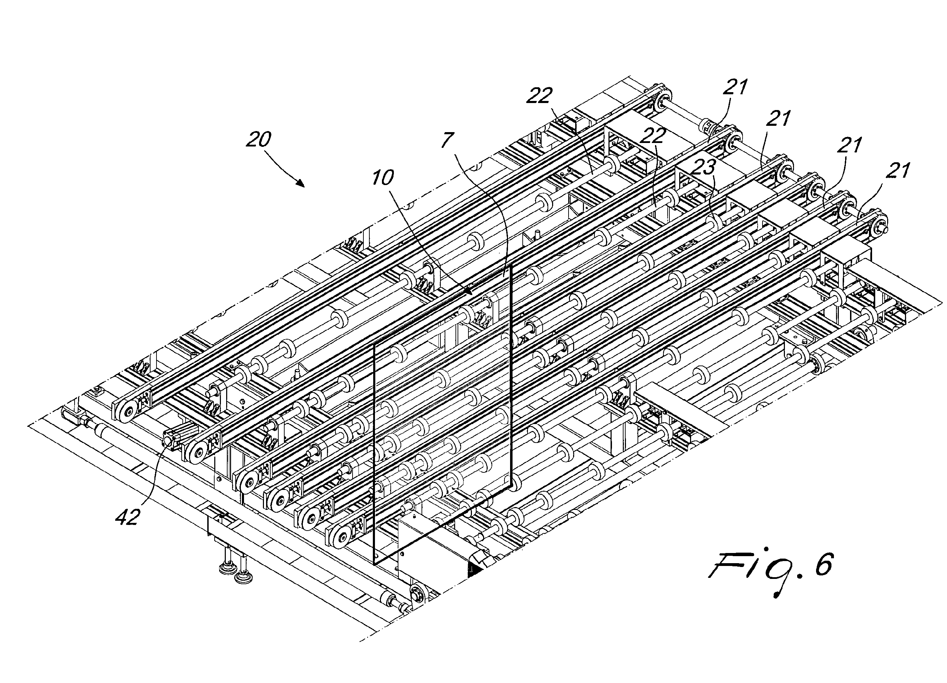

Figure 6 is an enlarged-scale perspective view of the detail of the pane in output from the first bilateral unit;

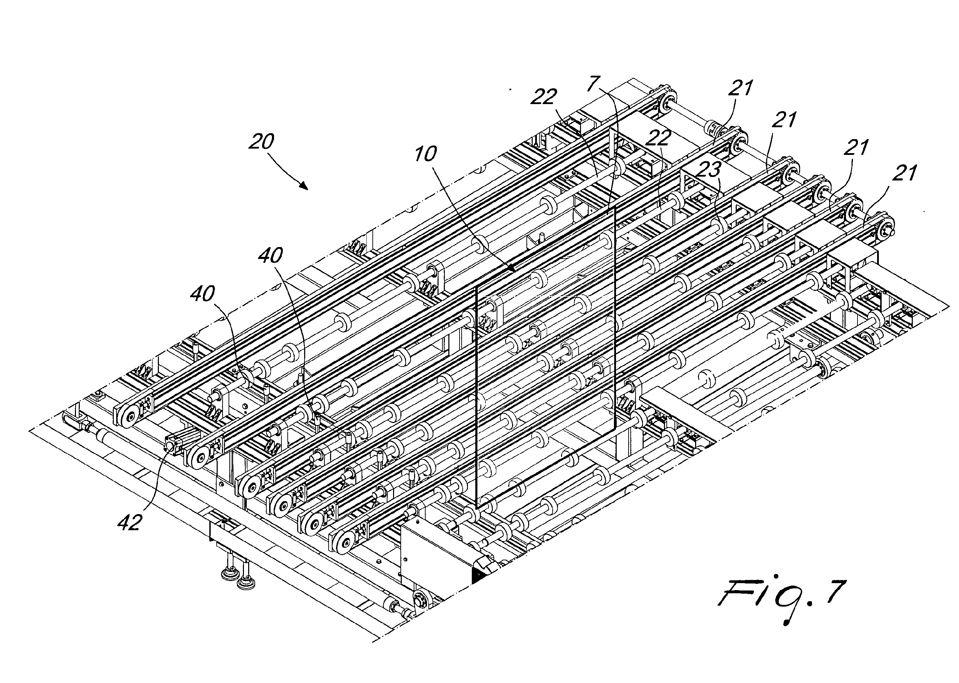

Figure 7 is a view of the pane on the angle transfer assembly, with the means for alignment of the unprocessed edge of the pane being processed activated;

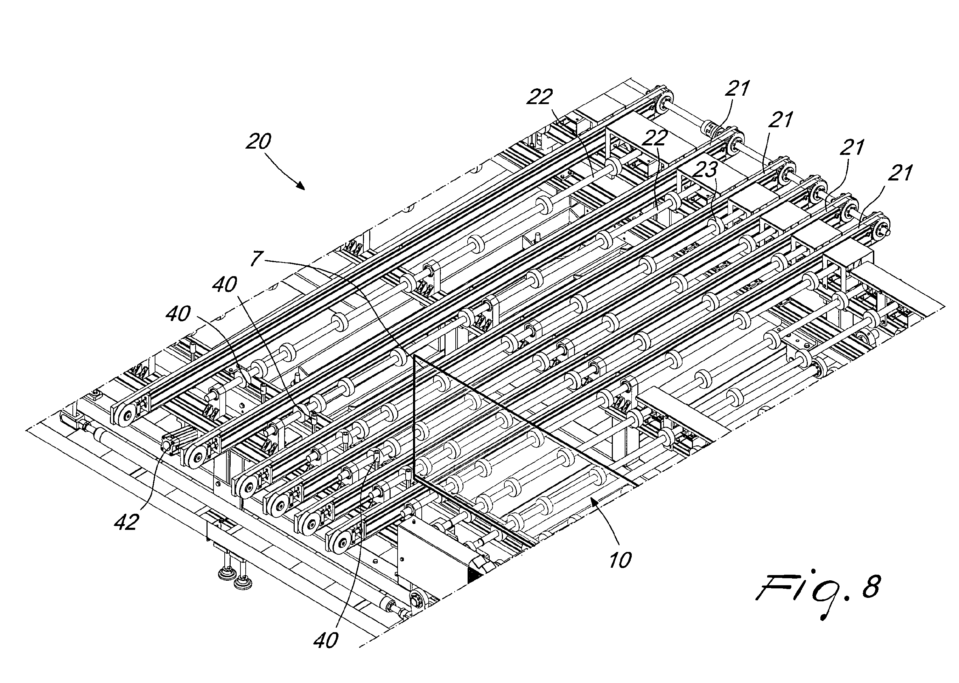

Figure 8 is a schematic view of the rotated pane;

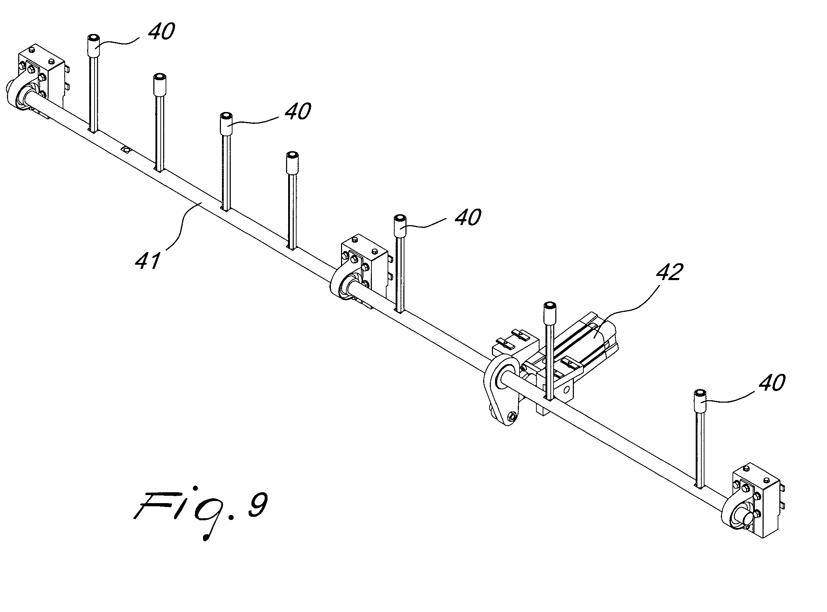

Figure 9 is a perspective view, taken from the inner side, of the means for alignment of the unprocessed edge.

With reference to the figures, the bilateral machine for processing panes shaped like a parallelogram with non-right angles, generally designated by the reference numeral 1, comprises an input station 2, which is constituted by a traditional roller bed which has a fixed abutment 3 and is arranged downstream of a first bilateral unit 4 which is advantageously of the twin multiple-head type, i.e., with a first plurality of fixed heads 5, which are arranged on the abutment side, and a first plurality of movable heads 6, which are arranged on the opposite side and can move to arrange themselves in accordance with the width of the pane; said head assemblies can be activated independently as a function of the position of the glass pane.

Advantageously, the pane, designated by the reference numeral 10, is arranged on the loading station 2 so that its short sides are processed first and the leading vertex is preferably the vertex designated by the reference numeral 7 and arranged on the opposite side with respect to the plurality of fixed abutment heads 5, i.e., arranged on the fixed side.

Downstream of the first bilateral unit 4 an angle transfer assembly is provided, generally designated by the reference numeral 20, which has means for transfer in the direction defined by the first bilateral unit which are constituted by belts 21 whose position can be varied in height and which are interposed between shafts 22 on which rollers 23 are arranged which impart to the pane a translational motion at right angles to the direction of transfer on the first bilateral unit and in a direction which corresponds to the processing direction on a second bilateral unit 30, which is arranged downstream of the angle transfer assembly and has, in a per se known manner, a second plurality of fixed abutment heads 31 with fixed positioning and a second plurality of movable heads 32 with variable positioning, which are mutually opposite and can arrange themselves as a function of the width of the pane, like the heads 5 and 6 of the first bilateral unit.

The peculiar characteristic of the invention consists in that there are means for rotation on the plane of arrangement of the pane being processed which in practice are provided by the belts 21 themselves in cooperation with means for the alignment of the non-processed edge, which can be activated selectively.

Such means are constituted by a plurality of abutment rollers 40, which protrude radially from a positioning bar 41 which is connected to an actuation element 42, which in practice allows to lower and lift the rollers 40 with the rotation of the positioning bar 41.

In greater detail, the pane 10, once processing on the first edges, which are preferably the shorter sides, has been performed, is made to advance to the angle transfer assembly, where the belts continue the advancement of the pane by a certain extent so as to be certain that the trailing corner of the pane 10 is carried, with respect to the translational direction, beyond the abutment line with respect to the second bilateral unit.

Once the pane has been moved forward, the rollers 40 are raised, define the abutment line and are positioned so that the first roller, arranged proximate to the abutment edge formed by the head assembly 5, is shifted so that the vertex of the pane does not touch such roller during the retraction of the pane for rotation.

Once the transfer of the pane onto the angle transfer assembly has been performed, the belts are turned in the opposite direction, producing a relative sliding with respect to the pane which, by engaging the rollers 40, is forced to rotate, thus moving one of the non-processed sides into abutment against the alignment line, which is formed by the rollers 40 and is aligned also with the plurality of abutment heads 31 arranged on the second bilateral unit, which performs in this manner the processing of the pane also on the remaining two sides, having obtained the rotation of the pane in a completely automatic manner.

From what has been described above it is therefore evident that the invention achieves the intended aim and objects, and in particular the fact is stressed that an angle transfer assembly is provided which is obtained by means of belts which initially rise with respect to the rollers, so as to pick up the pane that arrives from the first bilateral unit, and subsequently descend, so that the pane can be picked up, after being turned, by the rollers which send it to the second bilateral unit.

Advantageously, the pane must be arranged so that the trailing corner with respect to the feed direction of the pane lies at the fixed abutment line which is formed by the fixed working heads 5, so that there is the certainty that the corner does not collide with a roller 40, with the possibility of damage thereto.

The invention thus conceived is susceptible of numerous modifications and variations, all which are within the scope of the appended claims.

All the details may further be replaced with other technically equivalent elements.

In practice, the materials used, as well as the dimensions and the contingent shapes, may be any according to requirements.

The disclosures in Italian Patent Application No. MI2006A001234 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bilateral machine for processing panes shaped like a parallelogram with non-right angles, comprising an input station downstream of which there is a first bilateral unit which leads to an angle transfer assembly which is arranged upstream of a second bilateral unit, **characterized in that** said angle transfer assembly comprises means for rotation on the plane of arrangement of the pane being processed and means which can be activated selectively for the alignment of the unprocessed edges of said pane being processed.

2. The bilateral machine according to claim 1, **characterized in that** said angle transfer assembly comprises means for transfer in the direction of motion of the pane on said first bilateral unit which are adapted to provide said means for rotation on the plane of arrangement of the pane being processed.

3. The bilateral machine according to one or more of the preceding claims, **characterized in that** said means for transfer in the direction defined by said first bilateral unit comprise belts with variable vertical positioning which are interposed between rollers for the transfer of said pane being processed along a direction which is substantially perpendicular to the transfer direction formed on said first bilateral unit.

4. The bilateral machine according to one or more of the preceding claims, **characterized in that** said means for the alignment of the non-processed edge comprise abutment rollers which protrude on command with respect to the plane formed by said belts in order to provide an abutment for said pane being processed upon actuation of said belts in a direction which is opposite with respect to the direction for transfer from said first bilateral unit to said angle transfer assembly.

5. The bilateral machine according to one or more of the preceding claims, **characterized in that** it comprises a positioning bar from which said abutment rollers protrude radially, an actuation element being further provided for lowering and lifting said abutment rollers with the rotation of said positioning bar.

6. A method for processing panes shaped like a parallelogram with non-right angles, **characterized in that** it comprises the steps of: arranging a pane being processed on a first bilateral unit so that the leading vertex is arranged on the opposite side with respect to the abutment edge formed by the processing heads of said first bilateral unit, processing the first two sides, transferring the pane onto an angle transfer assembly, provided with belts with a vertically adjustable working surface, making the rear end of the pane being processed pass beyond the processing line of the other edge, which is formed by a second bilateral unit, lifting a plurality of abutment rollers which are mutually aligned, reversing the motion of said belts with rotation by slippage of the pane on the belts with arrangement of the other sides to be processed in alignment with said abutment rollers, lowering said belts below the working surface and transferring said pane onto the second bilateral unit for processing the other two sides.

7. The method according to claim 6, **characterized in that** the processing of the short sides is performed on said first bilateral unit.
